# EUROPÄISCHE PATENTSCHRIFT

(11) **EP 1 154 534 B1**
(45) Veröffentlichungstag und Bekanntmachung des Hinweises auf die Patenterteilung: **09.02.2005**
(21) Anmeldenummer: 01110273.8
(22) Anmeldetag: 26.04.2001
(51) Int. Cl.: H02G 3/10, H02G 3/18

(54) **Elektro-Installationsgerät**
Electrical installation apparatus
Appareillage d'instalation électrique

(30) Priorität: 09.05.2000 DE 20008344 U
(43) Veröffentlichungstag der Anmeldung: 14.11.2001
(73) Patentinhaber: Tehalit GmbH, 67716 Heltersberg (DE)
(72) Erfinder: Kauf, Peter, Dipl.-Ing., 66482 Zweibrücken (DE); Schmitt, Erwin, 67659 Kaiserslautern (DE); Schneckmann, Horst, 67705 Trippstadt (DE)
(74) Vertreter: Patentanwälte Möll und Bitterich

(56) Entgegenhaltungen:
- DE-B- 1 085 213
- DE-C- 817 473
- DE-U- 29 823 068
- FR-A- 2 665 326

## Beschreibung

Die Erfindung betrifft Elektro-Installationsgeräte mit einem Tragrahmen, der Befestigungsöffnungen aufweist, gemäß dem Oberbegriff des Anspruchs 1.

Elektro-Installationsgeräte, d. h. Schalter, Steckdosen, Überspannungsschutzgeräte usw., die für den Einbau in Unterputzdosen bestimmt sind, sind mit einem sogenannten Tragrahmen ausgerüstet. Dieser Tragrahmen, der an der Gerätefunktionseinheit befestigt ist, besitzt einen Frontring, an dem vier (DE-B 10 85 213) oder zwei (DE-C 81 74 73) Befestigungsöffnungen angebracht sind, die mit Befestigungsschrauben in der Stirnseite der Unterputz-Geräteeinbaudose korrespondieren. Die Befestigungsöffnungen bestehen aus einem Langloch, dessen lichte Weite geringfügig größer ist als der Durchmesser des Gewindeschaftes der Befestigungsschrauben, jedoch kleiner als der Durchmesser der Schraubenköpfe. An einem Ende besitzen die Befestigungsöffnungen eine Montageöffnung, deren Durchmesser größer ist als der der Schraubköpfe, so dass der Tragrahmen auch bei schon montierten Befestigungsschrauben auf die Unterputzdose aufgesetzt werden kann. Sobald der Tragrahmen über die Schraubköpfe geschoben wurde, werden Tragrahmen und Elektro-Installationsgerät in Position gedreht, exakt ausgerichtet und durch Anziehen der Schrauben fixiert.

In der oben erwähnten DE-B 10 85 213 wird als Nachteil der handelsüblichen Befestigungsöffnungen angegeben, dass beim Lockern der Befestigungsschrauben sich das Installationsgerät unbeabsichtigt verdrehen lässt, bis die Montageöffnung unter dem Schraubenkopf sitzt, so dass beim Abziehen eines stramm sitzenden Steckers das ganze Gerät aus der Einbaudose herausgezogen werden kann. Um dies zu verhindern, schlägt die DE-B 10 85 213 vor, dass an der Mündung des Langlochs in das Montageloch aus dem Tragring senkrecht nach oben ein Lappen hervorgebogen wird, der die Mündung so verengt, dass beim Lockern der Verschraubung ein selbsttätiges Gleiten der Schrauben aus dem Langloch in das Montageloch durch Anstoßen an den Lappen verhindert wird. Der Lappen soll mit einer Ecke so weit in die Führung des Langlochs hineinragen, dass an der engsten Stelle gerade der Schraubenschaft vorbeigeführt werden kann, was jedoch nur dann möglich ist, wenn die Schraub weit genug herausgedreht wurde. Um auch bei leicht gelockerten Schrauben noch wirksam zu sein, wird vorgeschlagen, dass der Lappen eine solche Höhe aufweist, dass er bei auf das Installationsgerät aufgesetzter Abdeckplatte bis auf diese oder in nächster Nähe derselben reicht. Dann ist der ganze Raum in der Höhe bis zur Abdeckplatte durch den Lappen ausgefüllt und es besteht keine Möglichkeit mehr, dass eine stark gelockerte Schraube mit ihrem Kopf über den Lappen hinwegrutschen kann.

Es versteht sich, dass das Ausstanzen und senkrecht nach oben Biegen eines solchen Lappens einen zusätzlichen Arbeitsgang bei der Herstellung der Tragrahmen darstellt: Des weiteren behindert ein solcher senkrecht nach oben stehender Lappen die Montage, da der Monteur lange schrauben muss, bis die Befestigungsschraube fest sitzt. Das ist unbefriedigend.

Handelsübliche Elektro-Installationsgeräte mit Tragrahmen werden auch in Geräteeinbaukanälen montiert. Man vergleiche beispielsweise die EP-A 0 862 248 oder auch die DE-U 298 08 496. Die Einbauverhältnisse in einem Geräteeinbaukanal unterscheiden sich jedoch wesentlich von den Einbauverhältnissen einer Unterputzdose. Insbesondere ist bei einer Kanalmontage oft kein Platz, um Elektrogerät und Tragrahmen in die korrekte Position zu drehen, so dass der Monteur die Befestigungsschrauben zunächst aus der Geräteeinbaudose herausschrauben und nach Aufsetzen des Gerätes wieder einschrauben muss. Dies ist sehr zeitraubend und daher unbefriedigend. Ein weiterer Nachteil beruht auf der Langlochform der Befestigungsöffnung. Eine auch nur um wenige Grad verdrehte Montage des Gerätes fällt im Gegensatz zu der üblichen Unterputz-Montage bei einer Gerätemontage im Kanal sofort auf. Auch dies ist unbefriedigend.

Der vorliegenden Erfindung liegt daher die Aufgabe zugrunde, ein Elektro-Installationsgerät für die Montage in Geräteeinbaudosen für Geräteinstallationskanäle anzugeben, welches einfach und schnell, vor allem aber exakt montiert werden kann.

Diese Aufgabe wird gelöst durch ein Elektro-Installationsgerät mit den Merkmalen des Anspruchs 1.

Auch die vorliegende Erfindung verwendet zur Montage der Elektro-Installationsgeräte einen Tragrahmen, der mit Befestigungsöffnungen ausgerüstet ist, die an einem Ende eine Montageöffnung besitzen, deren Durchmesser so groß ist, dass sie über die Köpfe der in der Front der Geräteeinbaudose befestigten Schrauben geschoben werden können. An diese Montageöffnung schließt sich jedoch kein Langschlitz sondern eine Fixieröffnung an. Der Durchmesser dieser Fixieröffnung ist kleiner als der Durchmesser des Schraubkopfes; sobald die Befestigungsschrauben angezogen sind, sitzt das Einbaugerät exakt justiert in der Geräteeinbaudose. Eine Engstelle zwischen Montageöffnung und Fixieröffnung, deren lichte Weite etwas kleiner ist als der Durchmesser des Gewindeschaftes der Schraube, sorgt dafür, dass die Befestigungsschrauben mit leichtem Druck auf den Tragrahmen von der Montageöffnung in die Fixieröffnung und umgekehrt geschoben werden müssen. Außerdem ist die Engstelle mit dafür verantwortlich, dass die Befestigungsschraube beim Anziehen nicht in die Montageöffnung zurückwandern kann.

Da die Engstelle in der Ebene des Tragrahmens sitzt, kann das Elektro-Installationsgerät schnell festgeschraubt werden. Bei der Erfindung verlaufen die Verbindungslinien, die jeweils zwischen den Zentren von Montage- und Fixieröffnung gezogen werden können, parallel zueinander. Außerdem sind die Montage- und Fixieröffnungen der parallelen Befestigungsöffnungen spiegelsymmetrisch und nicht wie bei den handelsüblichen Geräten punktsymmetrisch zueinander orientiert. Dies führt dazu, dass Gerät und Tragrahmen aus der Montageposition in die Fixierposition geschoben, nicht gedreht werden. Diese schiebende Bewegung kommt den Montageverhältnissen in Geräteeinbaukanälen mehr entgegen als die herkömmliche Drehbewegung.

Gemäß einer Weiterbildung der Erfindung ist der Tragrahmen als Tragsteg ausgebildet und besitzt nur zwei Befestigungsöffnungen. Diese Variante ist speziell für den Geräteeinbaukanal vorgesehen.

Anhand der Zeichnung soll die Erfindung in Form eines Ausführungsbeispiels näher erläutert werden. Es zeigen
- Fig. 1: ein Elektro-Installationsgerät als Seitenansicht,
- Fig. 2: eine Draufsicht auf das Elektro-Installationsgerät der Fig. 1,
- Fig. 3: eine Befestigungsschraube, wie sie in Geräteeinbaudosen verwendet wird, und
- Fig. 4: eine der Befestigungsöffnungen in vergrößerter Darstellung.

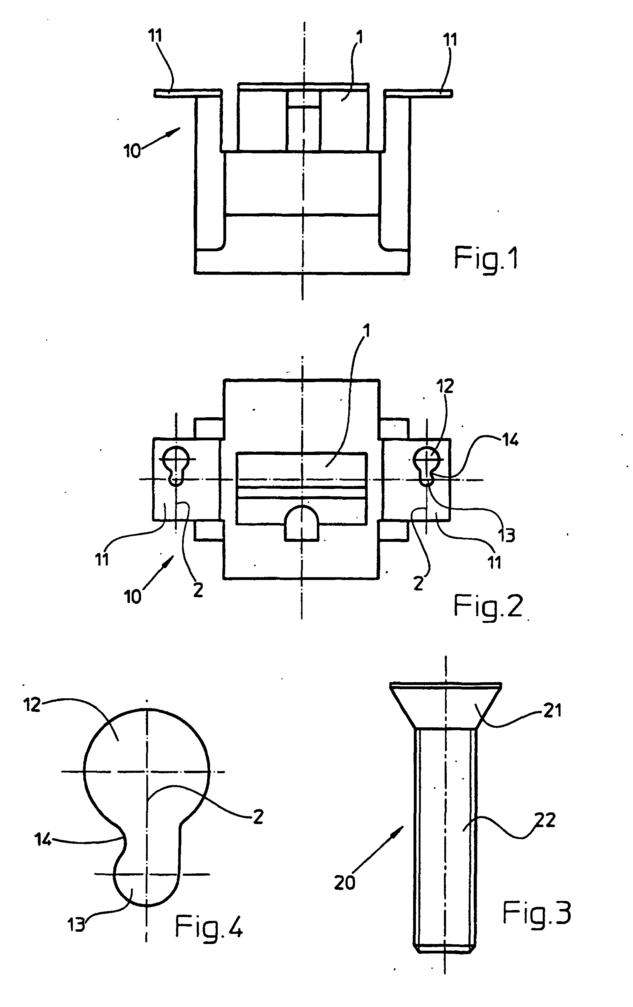

Fig. 1 als Seitenansicht und Fig. 2 als Draufsicht zeigen ein Elektro-Installationsgerät. Dieses besteht aus der eigentlichen Funktionseinheit 1, hier eine Telekommunikations- oder Daten-Steckdose und einem Tragrahmen 10. Der Tragrahmen 10 hat die Aufgabe, das Installationsgerät in einer Unterputzdose oder bevorzugt in einer Geräteeinbaudose eines Einbaukanals zu halten.

Zu diesem Zweck besitzt der Tragrahmen 10, der hier als Tragsteg ausgebildet ist, eine Frontfläche 11, in der Befestigungsöffnungen untergebracht sind. Einzelheiten der Befestigungsöffnungen sollen anhand der Fig. 4 beschrieben werden.

Fig. 3 zeigt eine der Befestigungsschrauben 20, wie sie handelsüblich in Geräteeinbaudosen, Unterputzdosen usw. verwendet werden. Die Schraube 20 besitzt einen Senkkopf 21 und einen Gewindeschaft 22. Der Durchmesser des Senkkopfes 21 ist deutlich größer als der Durchmesser des Gewindeschaftes 22.

Fig. 4 zeigt in vergrößerter Darstellung eine der Befestigungsöffnungen im Tragsteg 11. Man erkennt eine Montageöffnung 12, deren Durchmesser größer ist als der Durchmesser des Schraubkopfes 21. Anschließend an die Montageöffnung 12 erkennt man eine Fixieröffnung 13, deren Durchmesser kleiner ist als der Durchmesser des Senkkopfes 21, jedoch größer als der Durchmesser des Gewindeschaftes 22. Zwischen Montageöffnung 12 und Fixieröffnung 13 besteht eine Engstelle 14, deren lichte Weite geringfügig kleiner ist als der Durchmesser des Gewindeschaftes 22. Die Engstelle 14 ist so dimensioniert, dass Installationsgerät 1 und Tragrahmen 10 unter leichtem Druck von der Montageposition in die Fixierposition und umgekehrt geschoben werden können.

Verbindet man die Zentren von Montageöffnung 12 und Fixieröffnung 13 miteinander, so liegen die Verbindungslinien 2 der beiden Befestigungsöffnungen in Fig. 2 parallel zueinander. Dadurch kann das Installationsgerät 1, 10 durch eine Schiebebewegung aus der Montageposition in die Fixierposition und zurück gebracht werden, was den Montageverhältnissen in Geräteeinbaukanälen mehr entspricht als die übliche Drehbewegung.

## Patentansprüche

1. Elektro-Installationsgerät (1) mit einem Tragrahmen (10), der Befestigungsöffnungen (12, 13, 14) aufweist, die mit in der Stirnseite einer Geräteeinbaudose vorgesehenen Befestigungsschrauben (20) korrespondieren, wobei die Befestigungsöffnungen an jeweils einem Ende eine Montageöffnung (12) aufweisen, deren Durchmesser größer ist als der Durchmesser der Köpfe (21) der Befestigungsschrauben (20), und am anderen Ende eine Fixieröffnung (13), deren Durchmesser größer ist als der Durchmesser des Gewindeschaftes (22) und kleiner als der Durchmesser des Kopfes (21) der Befestigungsschrauben (20) ist, **gekennzeichnet durch** die Merkmale:
- das Gerät (1) ist für den Einbau in Geräteeinbaukanäle bestimmt,
- zwischen Montageöffnung (12) und Fixieröffnung (13) besteht eine Engstelle (14), deren Breite geringfügig kleiner ist als der Durchmesser des Gewindeschaftes (22), so dass die Befestigungsschrauben unter leichtem Druck von der Montageöffnung (12) in die Fixieröffnung (13) und umgekehrt verbracht werden können,
- die Zentren von Montage- und Fixieröffnung (12, 13) sind **durch** eine gedachte gerade Linie (2) miteinander verbunden,
- die Verbindungslinien (2) zweier Befestigungsöffnungen (12, 13, 14) verlaufen parallel zueinander,
- die Montage- und Fixieröffnungen (12, 13) der parallelen Befestigungsöffnungen sind so orientiert, dass die Befestigungsschrauben (20) **durch** eine lineare Bewegung von der Montageöffnung (12) in die Fixieröffnung (13) und umgekehrt geschoben werden.

2. Installationsgerät nach Anspruch 1, **gekennzeichnet durch** die Merkmale:
- der Tragrahmen (10)
- ist als Tragsteg ausgebildet
- und besitzt nur zwei Befestigungsöffnungen (12, 13, 14).

## Claims

1. Electrical installation apparatus (1) with a support frame (10) comprising fastening openings (12, 13, 14) which correspond to fastening screws (20) provided in the end side of an apparatus installation box, wherein the fastening openings in each case comprise at one end a mounting opening (12) whose diameter is greater than the diameter of the heads (21) of the fastening screws (20), and at the other end a fixing opening (13) whose diameter is greater than the diameter of the threaded shank (22) and smaller than the diameter of the head (21) of the fastening screws (20), **characterised by** the features:
- the apparatus (1) is intended for installation in apparatus installation trunking,
- there is a constriction (14) between the mounting opening (12) and the fixing opening (13), the width of which constriction is slightly less than the diameter of the threaded shank (22), so that the fastening screws can be brought under slight pressure from the mounting opening (12) into the fixing opening (13) and vice versa,
- the centres of the mounting and the fixing opening (12, 13) are connected together by an imaginary straight line (2),
- the connecting lines (2) of two fastening openings (12, 13, 14) extend parallel to one another,
- the mounting and fixing openings (12, 13) of the parallel fastening openings are oriented such that the fastening screws (20) are pushed by a linear movement from the mounting opening (12) into the fixing opening (13) and vice versa.

2. Installation apparatus according to Claim 1, **characterised by** the features:
- the support frame (10)
- is formed as a support web
- and has only two fastening openings (12, 13, 14).

## Revendications

1. Appareillage d'installation électrique (1) avec un cadre porteur (10) qui présente des ouvertures de fixation (12, 13, 14) qui correspondent à des vis de fixation (20) prévues dans la face avant d'un boîtier d'installation électrique, les ouvertures de fixation présentant chacune à une extrémité une ouverture de montage (12) dont le diamètre est plus grand que le diamètre des têtes (21) des vis de fixation (20) et à l'autre extrémité une ouverture de fixation (13) dont le diamètre est plus grand que le diamètre de la tige,filetée (22) et plus petit que le diamètre de la tête (21) des vis de fixation (20), **caractérisé par le fait que** :
- l'appareillage (1) est destiné à être installé dans des goulottes d'installation électrique,
- il existe entre l'ouverture de montage (12) et l'ouverture de fixation (13) un resserrement (14) dont la largeur est légèrement inférieure au diamètre de la tige filetée (22), de sorte qu'il est possible de faire passer les vis de fixation de l'ouverture de montage (12) dans l'ouverture de fixation (13) et inversement en exerçant une légère pression,
- les centres des ouvertures de montage (12) et de fixation (13) sont joints l'un à l'autre par une ligne droite imaginaire (2),
- les lignes de jonction (2) de deux ouvertures de fixation (12, 13, 14) sont parallèles entre elles,
- les ouvertures de montage (12) et de fixation (13) des ouvertures de fixation parallèles sont orientées de façon qu'un mouvement linéaire permet de pousser les vis de fixation (20) de l'ouverture de montage (22) dans l'ouverture de fixation (13) et inversement.

2. Appareillage d'installation électrique selon la revendication 1, **caractérisé par le fait que** :
- le cadre porteur (10)
- est réalisé sous forme de barrette porteuse
- et ne possède que deux ouvertures de fixation (12, 13, 14).
